# EUROPÄISCHE PATENTSCHRIFT

(11) **EP 2 584 677 B1**
(45) Veröffentlichungstag und Bekanntmachung des Hinweises auf die Patenterteilung: **04.01.2017**
(21) Anmeldenummer: 12188691.5
(22) Anmeldetag: 16.10.2012
(51) Int. Cl.: H02K 11/21

(54) **Drehwinkelgeber für einen Elektromotor, Elektromotor und Verfahren zum Herstellen eines solchen Drehwinkelgebers**
Angular position encoder for an electric motor, electric motor and method for producing such an angular position encoder
Indicateur d'angle de rotation pour un moteur électrique, moteur électrique et procédé de fabrication d'un tel indicateur d'angle de rotation

(30) Priorität: 17.10.2011 DE 102011084629
(43) Veröffentlichungstag der Anmeldung: 24.04.2013
(73) Patentinhaber: Dunkermotoren GmbH, 79848 Bonndorf/Schwarzwald (DE)
(72) Erfinder: Ravic Robert, 78176 Blumberg (DE); Kenne Daniel, 79780 Stühlingen (DE)
(74) Vertreter: DREISS Patentanwälte PartG mbB

(56) Entgegenhaltungen:
- EP-A1- 0 836 079
- JP-A- H06 284 641
- US-A1- 2005 082 926
- US-A1- 2007 146 171

## Beschreibung

Die Erfindung betrifft einen Drehwinkelgeber für einen Elektromotor, wobei der Drehwinkelgeber ein Geberelement mit einer Geberscheibe aufweist, die dazu eingerichtet ist, mit einer Welle des Elektromotors drehfest verbunden und konzentrisch mit der Welle angeordnet zu werden, und eine in einem Gehäuse des Drehwinkelgebers befestigte Schaltungsanordnung mit einem Sensor umfasst, der zum Erfassen einer Position der Geberscheibe eingerichtet ist. Die Erfindung betrifft außerdem einen Elektromotor mit einem solchen Drehwinkelgeber und ein Verfahren zum Herstellen eines solchen Drehwinkelgebers.

Ein solcher Drehwinkelgeber ist vom Markt her bekannt. Die Schaltungsanordnung des bekannten Drehwinkelgebers ist in dem Gehäuse des Drehwinkelgebers eigesetzt und an dem Gehäuse festgeschweißt. Beim Herstellen dieses Drehwinkelgebers muss das Gehäuse an den Stellen, an den es mit der Schaltungsanordnung verschweißt werden soll, erhitzt werden. Das Erhitzen dauert relativ lange, was dazu führt, dass das Festschweißen der Schaltungsanordnung am Gehäuse vergleichsweise viel Zeit in Anspruch nimmt. Der Zeitaufwand für das Verschweißen führt zu relativ hohen Herstellkosten des Drehwinkelgebers.

Darüber hinaus wird die Schaltungsanordnung beim Festschweißen thermisch belastet. Die thermische Belastung der Schaltungsanordnung kann dazu führen, dass eine Ausfallrate der Schaltungsanordnung erhöht oder eine Betriebsdauer der Schaltungsanordnung verkürzt wird. Die erhöhte Ausfallrate beziehungsweise die verkürzte Betriebsdauer kann während dem Herstellen des Drehwinkelgebers durch Qualitätssicherungsmaßnahmen allenfalls schwer erkannt werden, weil ein Überhitzen der Schaltungsanordnung infolge der thermischen Belastung oftmals erst nach einiger Betriebszeit zu einer Fehlfunktion der Schaltungsanordnung führt.

Somit besteht die Aufgabe der vorliegenden Erfindung darin, einen Drehwinkelgeber zu schaffen, der kostengünstig hergestellt werden kann und zudem eine geringere Ausfallrate und/oder eine längere Betriebsdauer aufweist. Zu Lösung dieser Aufgabe wird ein Drehwinkelgeber nach Anspruch 1, ein Elektromotor nach Anspruch 10 und ein Verfahren zum Herstellen eines Drehwinkelgebers nach Anspruch 11 vorgeschlagen.

In der EP 0 836 079 A1 wird ein Drehwinkelgeber vorgeschlagen, der mittels eines Bajonettverschlusses stirnseitig am Motorgehäuse befestigt wird.

Gemäß einer Ausführungsform ist ein Drehwinkelgeber der eingangs genannten Art vorgesehen, der dadurch gekennzeichnet, ist, dass das Gehäuse mindestens ein Rastelement aufweist, das an der Schaltungsanordnung angreift und diese dadurch im Gehäuse fixiert. Das Rastelement erlaubt eine schnelle Montage der Schaltungsanordnung im Gehäuse, ohne dass Teile des Gehäuses oder der Schaltungsanordnung dabei erhitzt werden müssen. Deshalb kann der Drehwinkelgeber kostengünstig hergestellt werden, ohne die Ausfallrate der Schaltungsanordnung infolge einer thermischen Belastung zu erhöhen.

Es ist besonders bevorzugt, dass das Gehäuse mindestens einen Führungsstift aufweist, der entlang einer Einschubrichtung zum Einschieben der Schaltungsanordnung in das Gehäuse verläuft und in ein Führungsloch der im Gehäuse befestigten Schaltungsanordnung hineinragt. Der Führungsstift und das Führungsloch bewirken eine Führungsfunktion derart, dass die Schaltungsanordnung beim Einsetzen in das Gehäuse richtig bezüglich des Gehäuses positioniert wird und dass sie ihre Position innerhalb des Gehäuses, insbesondere in einer Richtung orthogonal zur Einschubrichtung, beibehält.

Um die Position der ins Gehäuse eingebauten Schaltungsanordnung in einer zur Einschubrichtung parallelen Längsrichtung festzulegen, kann vorgesehen sein, dass die in dem Gehäuse befestigte Schaltungsanordnung gehalten von dem Rastelement an einer Anlagefläche des Gehäuses, vorzugsweise eines Gehäusebodens, anliegt. Hierdurch wird auch eine gute Fixierung der Schaltungsanordnung erreicht, weil sie zwischen der Anlagefläche und dem Rastelement eingeklemmt ist.

Ein einfaches Einschieben der Schaltungsanordnung ins Gehäuse mit einer relativ geringen Einschubkraft wird erreicht, wenn das Rastelement eine Einführschräge aufweist, die gegenüber einer zur Einschubrichtung parallelen Achse von der Anlagefläche schräg weggeneigt ist.

Es ist bevorzugt, dass das Rastelement eine Halteschräge aufweist, die gegenüber der zur Einschubrichtung parallelen Achse zur Anlagefläche schräg hingeneigt ist, wobei die Halteschräge an der im Gehäuse befestigten Schaltungsanordnung anliegt. Aufgrund der Halteschräge kann die Schaltungsanordnung auch dann sicher im Gehäuse montiert werden, wenn Abmessungen der Schaltungsanordnung Fertigungstoleranzen unterworfen sind.

Ein guter Halt der Schaltungsanordnung im Gehäuse und eine besonders einfache Montage der Schaltungsanordnung werden ermöglicht, wenn das Rastelement zumindest in einem Bereich elastisch verformbar ist.

Um den Drehwinkelgeber bzw. dessen Rastelement einfach herstellen zu können, wird vorgeschlagen, dass das Rastelement in eine Seitenwand des Gehäuses eingeformt ist, wobei die Seitenwand an den Gehäuseboden angrenzt und gegenüber diesem, vorzugsweise rechtwinklig, geneigt ist.

Alternativ hierzu kann vorgesehen sein, dass das Rastelement an dem Gehäuseboden angeordnet ist und entlang der Einschubrichtung von diesem abragt.

Es ist bevorzugt, dass das Gehäuse mitsamt des Rastelements und/oder des Führungsstifts als ein einziges Bauteil, vorzugsweise als Spritzgussteil aus Kunststoff, gebildet ist. Auf diese Weise lässt sich der Drehwinkelgeber einfach herstellen.

Gemäß einer weiteren Ausführungsform der Erfindung ist ein Elektromotor mit einem Drehwinkelgeber vorgesehen, wobei der Drehwinkelgeber ein Geberelement mit einer Geberscheibe aufweist, die mit einer Welle des Elektromotors drehfest verbunden und konzentrisch mit der Welle angeordnet ist, und eine in einem Gehäuse des Drehwinkelgebers befestigte Schaltungsanordnung mit einem Sensor umfasst, der zum Erfassen einer Position der Geberscheibe eingerichtet ist, und wobei es sich bei dem Drehwinkelgeber um einen hier beschriebenen Drehwinkelgeber gemäß der Erfindung handelt.

Gemäß einer noch weiteren Ausführungsform der Erfindung ist ein Verfahren zum Herstellen eines Drehwinkelgebers für einen Elektromotor vorgesehen, wobei der Drehwinkelgeber ein Geberelement mit einer Geberscheibe aufweist, die dazu eingerichtet ist, mit einer Welle des Elektromotor drehfest verbunden zu werden, und gemäß dem Verfahren eine Schaltungsanordnung mit einem Sensor, der zum Erfassen einer Position der Geberscheibe eingerichtet ist, in einem Gehäuse des Drehwinkelgebers befestigt wird, und wobei die Schaltungsanordnung derart im Gehäuse befestigt wird, dass mindestens ein Rastelement an der Schaltungsanordnung angreift und diese dadurch im Gehäuse fixiert.

Es ist bevorzugt, dass die Schaltungsanordnung entlang einer Einschubrichtung in das Gehäuse eingeschoben wird, bis das Rastelement an der Schaltungsanordnung angreift, um sie im Gehäuse zu fixieren.

Weiter ist bevorzugt, dass die Schaltungsanordnung in das Gehäuse eingeschoben wird, bis sie an einer Anlagefläche des Gehäuses, vorzugsweise eines Gehäusebodens, anliegt.

Um mittels des Verfahrens die Vorteile des hier beschriebenen Drehwinkelgebers zu erzielen, wird vorgeschlagen, einen Drehwinkelgeber gemäß der Erfindung herzustellen.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine geschnittene Seitenansicht eines Elektromotors gemäß einer ersten Ausführungsform;
- Figur 2: eine geschnittene Seitenansicht eines Drehwinkelgebers des Elektromotors aus Fig. 1;
- Figur 3: eine geschnittene Seitenansicht eines Drehwinkelgebers gemäß einer zweiten Ausführungsform; und
- Figur 4: eine geschnittene Draufsicht auf einen Drehwinkelgeber gemäß einer dritten Ausführungsform.

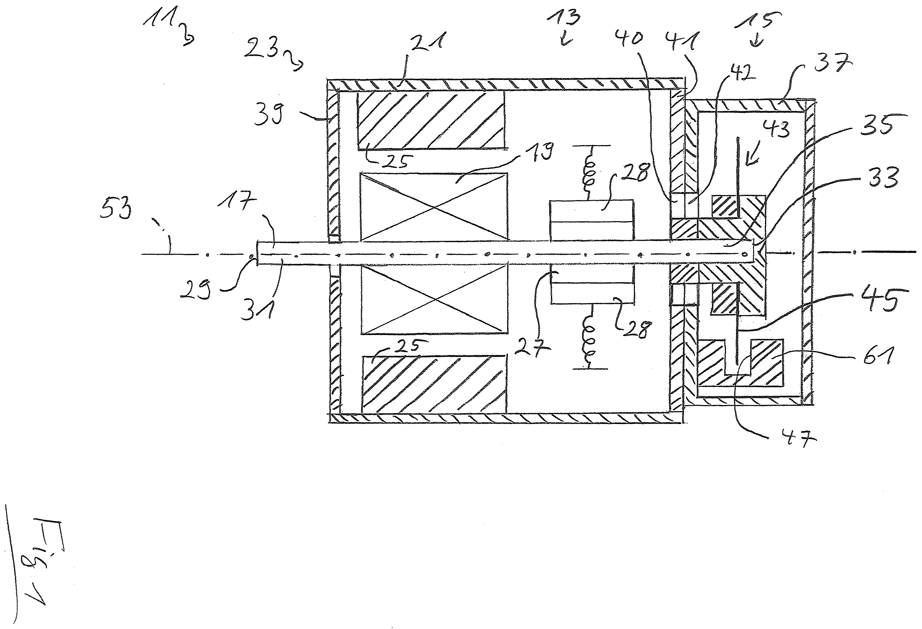

Figur 1 zeigt einen Elektromotor 11 mit einem Motorabschnitt 13 und einen Drehwinkelgeber 15. Bei dem hier gezeigten Elektromotor 11 handelt es sich um einen permanent erregten Gleichstrommotor mit einer an einer Welle 17 angeordneten Läuferwicklung 19 und einem an einer Innenseite eines zylindrischen Gehäuseabschnitts 21 eines Motorgehäuses 23 des Elektromotors 11 angeordneten schalenförmigen Arbeitsmagneten 25. Die Erfindung kann jedoch auch in Verbindung mit anderen Arten von Elektromotoren angewendet werden.

Zwischen der Läuferwicklung 19 und dem Drehwinkelgeber 15 ist an der Welle 17 ein Kollektor 27 angeordnet, gegen dessen Kontaktflächen beispielsweise als Kohlen 28, ausgebildete Bürsten des Elektromotors 11 drücken.

Es versteht sich, dass der Elektromotor auch bürstenlos oder auf sonstige Weise ausgebildet sein kann.

An einem in Figur 1 links dargestellten ersten Ende 29 der Welle 17 ist ein Antriebsabschnitt 31 der Welle 17 vorgesehen, welcher aus dem Motorgehäuse 23 des Elektromotors 11 herausragt. Der Antriebsabschnitt 31 kann mit einem anzutreibenden Teil eines Geräts, in das der Elektromotor 11 eingebaut ist, verbunden werden. Beispielsweise kann am Antriebsabschnitt 31 ein Zahnrad oder dergleichen angeordnet sein. Der Antriebsabschnitt 31 kann auch mit einer weiteren Welle verbunden werden.

An einem dem antriebsseitigen ersten Ende 29 gegenüberliegenden zweiten Ende 33 der Welle 17 ist der Drehwinkelgeber 15 angeordnet. Ein Abschnitt der Welle 17 an dem zweiten Ende 33 bildet einen Geberabschnitt 35 der Welle 17, der aus dem Motorgehäuse 23 herausragt und in ein Gebergehäuse 37 des Drehwinkelgebers 15 hineinragt. In der gezeigten Ausführungsform mit dem insgesamt zylinderartig geformten Motorgehäuse 23 ragt der Antriebsabschnitt 31 aus einer Öffnung in einem zweiten Motorgehäuseabschnitt 39 aus dem Motorgehäuse 23 heraus. Der Geberabschnitt 35 ragt aus einer ersten Geberöffnung 40 des Motorgehäuses 23 heraus, welche sich an einem dritten Motorgehäuseabschnitt 41 des Motorgehäuses 23 befindet. In der gezeigten Ausführungsform bildet der erste Motorgehäuseabschnitt 21 einen Zylindermantel des zylinderförmigen Gehäuses 23, und der zweite Motorgehäuseabschnitt 39 sowie der dritte Motorgehäuseabschnitt 41 bilden einander gegenüberliegende Deckflächen des insgesamt zylinderförmigen Gehäuses 23.

Die Welle 17 ragt auch durch eine zweite Geberöffnung 42 des Gebergehäuses 37. Das Gebergehäuse ist derart an dem Motorgehäuse 23 befestigt, dass die erste Geberöffnung 40 und die zweite Geberöffnung 42 vorzugsweise deckungsgleich nebeneinander liegen.

Der Drehwinkelgeber 15 weist ein Geberelement 43 mit einer vorzugsweise kreisscheibenförmigen Geberscheibe 45 auf, die drehfest mit der Welle 17 verbunden ist. Ferner umfasst der Drehwinkelgeber 15 einen Sensor 47, der zum Erfassen einer Position der Geberscheibe 45 eingerichtet sein kann. In der gezeigten Ausführungsform weist die Geberscheibe 45 ein vorzugsweise entlang einer mit der Welle 17 konzentrischen Kreisbahn angeordnetes Lochmuster auf und der Sensor 47 umfasst eine oder mehrere Gabellichtschranken, die zum Erfassen einzelner Löcher des Lochmusters eingerichtet sind.

Es versteht sich, dass der Drehwinkelgeber 15 auch eine Geberscheibe aufweisen kann, die optisch oder magnetisch oder reflexiv oder auf sonstige Weise mechanisch abgetastet wird.

Der Drehwinkelgeber 15 kann beispielsweise als Inkrementalgeber ausgebildet sein. Mit Hilfe einer Auswerteeinrichtung kann der Drehwinkelgeber 15 zum Erfassen eines Betrags und/oder der Richtung und/oder der Drehzahl einer Drehung der Welle 17 vorgesehen sein.

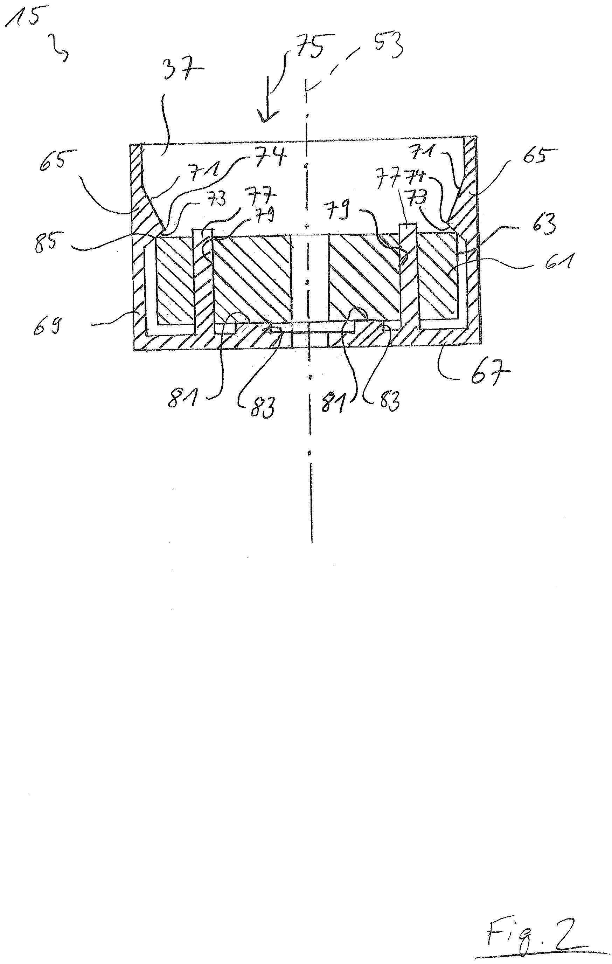

Figur 2 zeigt das Gebergehäuse 37 und eine Schaltungsanordnung 61 des Drehwinkelgebers 15 im Detail. Der Übersichtlichkeit halber sind die Welle 17 und das Geberelement 43 nicht eingezeichnet. Jedoch sind eine gemeinsame Längsachse 53 des Gebergehäuses 37, der Schaltungsanordnung 61, der Welle 17 sowie des Geberelements 43 dargestellt. Der in Figur 1 dargestellte Sensor 47 ist Teil der Schaltungsanordnung 61. Bei der Schaltungsanordnung 61 kann es sich um eine elektronische Schaltung handeln, die mit samt dem Sensor 47 in einem Schaltungsgehäuse 63 angeordnet ist. Die Schaltungsanordnung 61 kann einen Steckverbinder aufweisen, mit dem die Schaltungsanordnung 61 an eine Auswerteeinrichtung zum Auswerten der mittels der Schaltungsanordnung 61 erfassten Drehbewegungen der Welle 17 beziehungsweise des Geberelements 43 angeschlossen werden kann.

Das Gebergehäuse 37 weist Rastelemente 65 auf, die an der Schaltungsanordnung 61, insbesondere an deren Schaltungsgehäuse 63, angreifen, um die Schaltungsanordnung im Gebergehäuse 37 zu fixieren. Bei dem in Figur 2 gezeigten insgesamt zylinderförmigen Gebergehäuse 37 ist ein Paar diametral bezüglich der Längsachse 53 gegenüberliegender Rastelemente 65 vorgesehen. Abweichend hiervon können auch zwei oder mehrere solcher Paare von Rastelemente 65 vorgesehen sein. Darüber hinaus ist es auch denkbar, eine ungerade Anzahl von Rastelementen 65 anzuordnen. Es kann beispielsweise nur ein Rastelement 65 oder es können drei Rastelemente 65 vorgesehen werden.

Das Gebergehäuse 37 ist vorzugsweise als ein mittels Spritzgießen hergestelltes Kunststoffteil ausgeführt. Die Rastelemente 65 sind in eine gegenüber einem Gehäuseboden 67 geneigten Seitenwand 69 des Gebergehäuses 37 eingeformt. Die Seitenwand 69 kann parallel zu der Längsachse 53 verlaufen, und der Gehäuseboden 67 kann orthogonal zu der Längsachse 53 angeordnet sein, sodass der Gehäuseboden 67 und die Gehäusewand 69 rechtwinklig zueinander angeordnet sind.

Zumindest eines der Rastelemente 65 weist eine Einführschräge 71 und eine Halteschräge 73 auf, die nebeneinander angeordnet sind, sodass zwischen der Einführschräge 71 und der Halteschräge 73 eine Kante 74 entsteht. Die Einführschräge 71 und die Halteschräge 73 sind gegeneinander geneigt. Insbesondere ist die Einführschräge gegenüber einer zu einer Einschubrichtung (Pfeil 75) parallelen Achse vom Gehäuseboden 67 schräg weggeneigt. Die Einschubrichtung 75 kann beispielsweise entlang der Längsachse 53 verlaufen, sodass die zur Einschubrichtung parallele Achse der Längsachse 53 entsprechen kann.

Die Halteschräge 73 ist gegenüber der zur Einschubrichtung 75 parallelen Achse, insbesondere gegenüber der Längsachse 53, zum Gehäuseboden 67 schräg hingeneigt. Die Halteschräge 73 weist einen größeren Neigungswinkel gegenüber der Längsachse 53 auf als die Einführschräge 71. Das heißt, die Einführschräge 71 verläuft in Einschubrichtung 75 flacher als die Halteschräge 73.

Vom Gehäuseboden 67 ragen Führungsstifte 77 ab, die innerhalb des Gebergehäuses 37 parallel zur Längsachse 53 und somit entlang der Einschubrichtung 75 verlaufen. Jeder Führungsstift 77 verläuft innerhalb eines Führungslochs 79 der im Gebergehäuse 37 befestigten Schaltungsanordnung 61.

Wie in Figur 2 dargestellt, können die Führungsstifte 77 einstückig mit dem Gebergehäuse 37 ausgebildet sein. Die Anzahl der Führungsstifte 77 kann beliebig variiert werden. Es kann beispielsweise, wie in Figur 2 gezeigt, ein Paar diametral gegenüberliegende Führungsstifte 77 vorgesehen sein. Es können mehrere solcher Paare von Führungsstiften 77 vorgesehen sein und/oder es kann eine ungerade Anzahl an Führungsstiften 77 vorhanden sein.

Der Gehäuseboden 67 weist mindestens eine Anlagefläche 81 auf, an der die Schaltungsanordnung 61 am Gehäuseboden 67 anliegt. Die Anlagefläche 81 oder die Anlageflächen 81 kann beziehungsweise können durch Erhebungen 83 am Gehäuseboden 67, die in das Innere des Gebergehäuses 37 hineinragen, gebildet sein.

Um die Schaltungsanordnung 61 in das Gebergehäuse 37 einzubauen, wird die Schaltungsanordnung 61 in Einschubrichtung 75 (in der Darstellung von Figur 2 von oben) in das Gebergehäuse 37 eingeschoben. Die Rastelemente 65 sind elastisch verformbar. Sobald die Schaltungsanordnung 61 die Einführschräge 71 passiert, bewegt sich die Einführschräge 71 beziehungsweise das entsprechende Rastelement 65 seitlich, das heißt orthogonal zur Längsachse 53, nach außen, sodass die Schaltungsanordnung 61 an den Rastelementen 65 vorbeibewegt werden kann. Die Schaltungsanordnung 61 wird solange in Einschubrichtung 75 bewegt, bis sie an den Anlageflächen 81 anliegt. Wenn die Schaltungsanordnung 61 an den Anlageflächen 81 anliegt, bewegen sich die Rastelemente 65 beziehungsweise die Flächen 71, 73 wieder zumindest etwas zurück, sodass die Halteschräge 73 jedes Rastelements 65 an der Schaltungsanordnung 61 anliegt. Die Haltesschräge 73 bewirkt, dass das Rastelement 65 auch dann an der Schaltungsanordnung 61 anliegt, wenn Abmessungen der Schaltungsanordnung 61, beispielsweise eine Höhe der Schaltungsanordnung oder eine Breite der Schaltungsanordnung 61, etwa aufgrund von Fertigungstoleranzen, von vorgegebenen Abmessungen abweichen.

Dadurch, dass die Halteschräge 73 der einzelnen Rastelemente 65 an der Schaltungsanordnung 61 anliegen, und die Rastelemente 65 elastisch verformbar sind, wird die Schaltungsanordnung 61 zwischen den Rastelementen 65 und den Anlageflächen 81 eingeklemmt. Die Führungsstifte 77 und die entsprechenden Führungslöcher 79 sorgen dafür, dass eine Lage der Schaltungsanordnung in seitlicher Richtung, das heißt orthogonal zur Längsachse 53, hinreichend genau festgelegt ist. In einer nicht gezeigten Ausführungsform der Erfindung sind die Führungsstifte 77 nicht vorhanden. Bei dieser Ausführungsform braucht die Schaltungsanordnung 61 deshalb keine Führungslöcher 79 aufzuweisen.

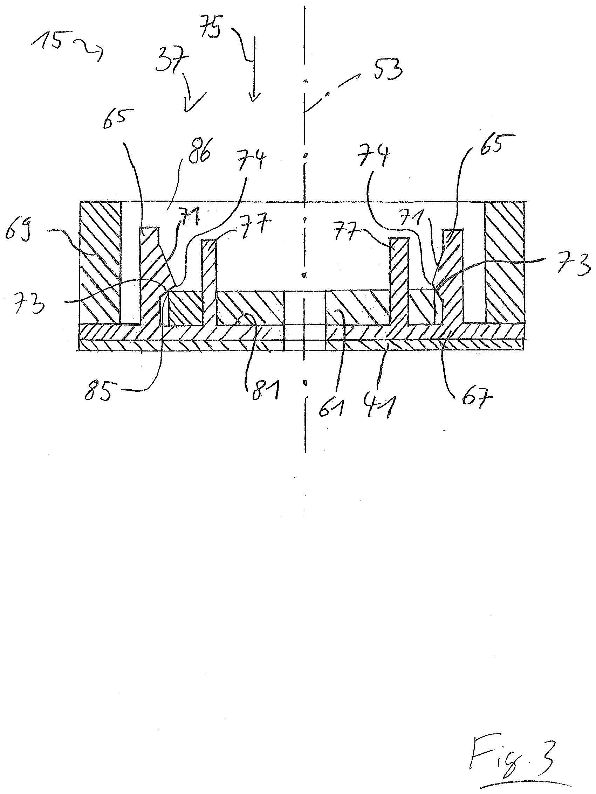

Figur 3 zeigt eine weitere Ausführungsform des Drehwinkelgebers 15. Anders als bei der in Figur 2 gezeigten Ausführungsform sind die Rastelemente 65 nicht in die Seitenwand 69 eingeformt, sondern sind am Gehäuseboden 67 angeordnet und ragen von diesem entlang der Einschubrichtung 75 und/oder entlang der Längsachse 53 vom Gehäuseboden 67 ab. Der Gehäuseboden 67 ist als eine Grundplatte des Gebergehäuses 37 ausgestaltet, die an dem dritten Motorgehäuseabschnitt 41 angeordnet sein kann. Anders als bei dem in Figur 2 gezeigten Gebergehäuse 37 ist die Seitenwand 69 nicht einstückig mit dem Gehäuseboden sondern als Teil eines Gehäusedeckels 86 des Gebergehäuses 37 ausgebildet.

Die Rastelemente 65 weisen denselben Grundaufbau wie die in Figur 2 gezeigten Rastelemente 65 mit den beiden Schrägen 71, 73 auf. Die Rastelemente 65 können mit dem Gehäuseboden 67 und den Führungsstiften 77 ein einziges Spritzgussteil bilden.

In den Ausführungsformen, die in den Figuren 2 und 3 gezeigt sind, sind die Einführschräge 71 und die Halteschräge 73 der Längsachse 53 zugewandt, sodass die Rastelemente 65 mit einem zumindest im Wesentlichen tangential verlaufenden Rand 85 der Schaltungsanordnung 61 zusammenwirken. Je nach genauer Ausgestaltung der Schaltungsanordnung 61 kann der Rand 85 gebogen sein und/oder einen Abschnitt mit einem geraden Verlauf aufweisen. Dementsprechend verläuft die Kante 74 zwischen den beiden Schrägen 71, 73 zumindest annähernd parallel zu dem Rand 85 und/oder zumindest annähernd tangential bezüglich der Längsachse 53.

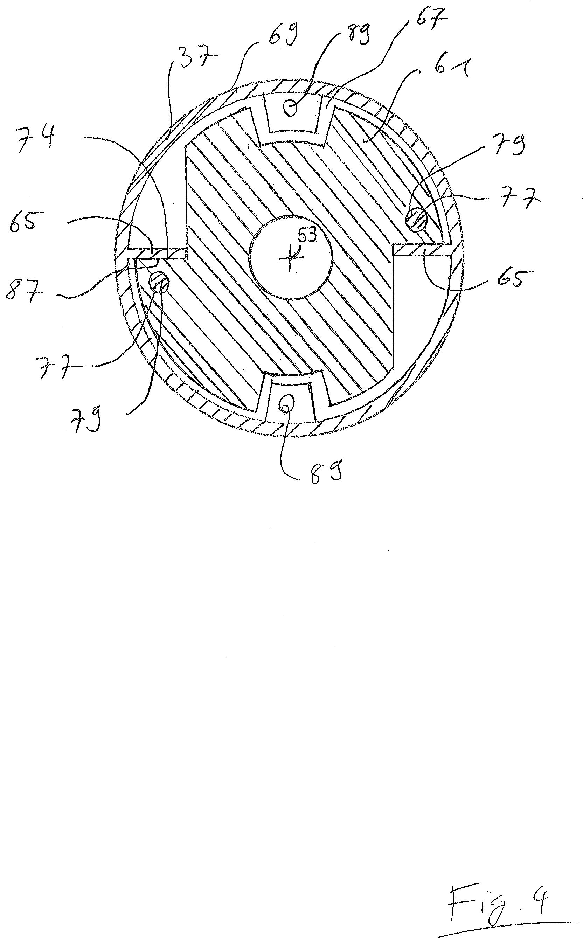

Bei der in Figur 4 gezeigten Ausführungsform wirken die Rastelemente 65 mit einem weiteren Rand 87 der Schaltungsanordnung 61 zusammen, der zumindest annähernd entlang einer radialen Richtung bezüglich der Längsachse 53 verläuft. Die Kante 74 zwischen den beiden Schrägen 71, 73 (Fig. 2, 3) der Rastelemente 65 verläuft zumindest annähernd parallel zu dem weiteren Rand 87, das heißt zumindest annähernd in radialer Richtung bezüglich des Längsachse 53. Auch bei der in Figur 4 gezeigten Ausführungsform können die Führungsstifte 77 und die entsprechenden Führungslöcher 79 vorgesehen sein. In einer nicht gezeigten Ausführungsform sind die Führungsstifte 77 nicht vorhanden. Bei dieser Ausführungsform können dementsprechend auch die Führungslöcher 79 entfallen.

Das Gebergehäuse 37 kann beispielsweise an seinem Gehäuseboden 67 ein oder mehrere Befestigungslöcher 89 aufweisen, mit dem das Gebergehäuse 37 an dem Motorgehäuse 23 beispielsweise mittels Schrauben befestigt werden kann.

Insgesamt stellt die vorliegende Erfindung den Drehwinkelgeber 15 beziehungsweise den Elektromotor 11 bereit, bei dem die Schaltungsanordnung 61 schnell und ohne thermische Belastung der Schaltungsanordnung 61 in dem Gebergehäuse 37 befestigt werden kann. Durch die schnelle Befestigung werden Fertigungskosten reduziert. Durch das Vermeiden der thermischen Belastung wird die Verfügbarkeit der hergestellten Drehwinkelgeber 15 beziehungsweise der damit ausgestatteten Elektromotoren 11 erhöht.

## Patentansprüche

1. Drehwinkelgeber (15) für einen Elektromotor (11), wobei der Drehwinkelgeber (15) ein Geberelement (43) mit einer Geberscheibe (45) aufweist, die dazu eingerichtet ist, mit einer Welle (17) des Elektromotors (11) drehfest verbunden und konzentrisch mit der Welle (17) angeordnet zu werden, und eine in einem Gehäuse (37) des Drehwinkelgebers (15) befestigte Schaltungsanordnung (61) mit einem Sensor (47) umfasst, der zum Erfassen einer Position der Geberscheibe (45) eingerichtet ist, **dadurch gekennzeichnet, dass** das Gehäuse (37) mindestens ein Rastelement (65) aufweist, das an der Schaltungsanordnung (61) angreift und diese dadurch im Gehäuse (37) fixiert.

2. Drehwinkelgeber (15) nach Anspruch 1, **dadurch gekennzeichnet, dass** das Gehäuse (23) mindestens einen Führungsstift (77) aufweist, der entlang einer Einschubrichtung (75) zum Einschieben der Schaltungsanordnung (61) in das Gehäuse (37) verläuft und in ein Führungsloch (79) der im Gehäuse (37) befestigten Schaltungsanordnung (61) hineinragt.

3. Drehwinkelgeber (15) nach Anspruch 1 oder 2, **dadurch gekennzeichnet, dass** die in dem Gehäuse (37) befestigte Schaltungsanordnung (61) gehalten von dem Rastelement (65) an einer Anlagefläche (81) des Gehäuses, vorzugsweise eines Gehäusebodens (67), anliegt.

4. Drehwinkelgeber (15) nach Anspruch 3, **dadurch gekennzeichnet, dass** das Rastelement (65) eine Einführschräge (71) aufweist, die gegenüber einer zur Einschubrichtung (75) parallelen Achse (53) von der Anlagefläche (81) weggeneigt ist.

5. Drehwinkelgeber (15) nach Anspruch 3 oder 4, **dadurch gekennzeichnet, dass** das Rastelement (65) eine Halteschräge (73) aufweist, die gegenüber der zur Einschubrichtung (75) parallelen Achse (53) zur Anlagefläche (81) hingeneigt ist, wobei die Halteschräge (73) an der im Gehäuse (37) befestigten Schaltungsanordnung (61) anliegt.

6. Drehwinkelgeber (15) nach einem der vorhergehenden Ansprüche, **dadurch gekennzeichnet, dass** das Rastelement (65) zumindest in einem Bereich elastisch verformbar ist.

7. Drehwinkelgeber (15) nach einem der vorhergehenden Ansprüche, **dadurch gekennzeichnet, dass** das Rastelement (65) in eine Seitenwand (69) des Gehäuses (37) eingeformt ist, wobei die Seitenwand (69) an den Gehäuseboden (67) angrenzt und gegenüber diesem, vorzugsweise rechtwinklig, geneigt ist.

8. Drehwinkelgeber (15) nach einem der Ansprüche 1 bis 6, **dadurch gekennzeichnet, dass** das Rastelement (65) an dem Gehäuseboden (67) angeordnet ist und entlang der Einschubrichtung (75) von diesem abragt.

9. Drehwinkelgeber (15) nach einem der vorhergehenden Ansprüche, **dadurch gekennzeichnet, dass** das Gehäuse (37) mitsamt des Rastelements (65) und/oder des Führungsstifts (77) als ein einziges Bauteil, vorzugsweise als Spritzgussteil aus Kunststoff, gebildet ist.

10. Elektromotor (11) mit einem Drehwinkelgeber (15), wobei der Drehwinkelgeber (15) ein Geberelement (43) mit einer Geberscheibe (45) aufweist, die mit einer Welle (17) des Elektromotors (11) drehfest verbunden und konzentrisch mit der Welle (17) angeordnet ist, und eine in einem Gehäuse (37) des Drehwinkelgebers (15) befestigte Schaltungsanordnung (61) mit einem Sensor (47) umfasst, der zum Erfassen einer Position der Geberscheibe (45) eingerichtet ist, **dadurch gekennzeichnet, dass** es sich bei dem Drehwinkelgeber (15) um einen Drehwinkelgeber (15) nach einem der vorhergehenden Ansprüche handelt.

11. Verfahren zum Herstellen eines Drehwinkelgebers (15) für einen Elektromotor (11), wobei der Drehwinkelgeber (15) ein Geberelement (43) mit einer Geberscheibe (45) aufweist, die dazu eingerichtet ist, mit einer Welle (17) des Elektromotors (11) drehfest verbunden zu werden, und gemäß dem Verfahren eine Schaltungsanordnung (61) mit einem Sensor (47), der zum Erfassen einer Position der Geberscheibe (45) eingerichtet ist, in einem Gehäuse (37) des Drehwinkelgebers (15) befestigt wird, **dadurch gekennzeichnet, dass** die Schaltungsanordnung (61) derart im Gehäuse (37) befestigt wird, dass mindestens ein Rastelement (65) an der Schaltungsanordnung (61) angreift und diese dadurch im Gehäuse (37) fixiert.

12. Verfahren nach Anspruch 11, **dadurch gekennzeichnet, dass** die Schaltungsanordnung (61) entlang einer Einschubrichtung (75) in das Gehäuse (37) eingeschoben wird, bis das Rastelement (65) an der Schaltungsanordnung (61) angreift, um sie im Gehäuse (37) zu fixieren.

13. Verfahren nach Anspruch 11 oder 12, **dadurch gekennzeichnet, dass** die Schaltungsanordnung (61) in das Gehäuse (37) eingeschoben wird, bis sie an einer Anlagefläche (81) des Gehäuses (37), vorzugsweise eines Gehäusebodens (67), anliegt.

14. Verfahren nach einem der Ansprüche 11 bis 13, **dadurch gekennzeichnet, dass** ein Drehwinkelgeber (15) nach einem der Ansprüche 1 bis 9 hergestellt wird.

## Claims

1. A rotary encoder (15) for an electric motor (11), wherein the rotary encoder (15) comprises an encoder element (43) with an encoder disc (45), which is set up to be connected in a rotationally rigid manner to a shaft (17) of the electric motor (11) and arranged concentrically with the shaft (17), and comprises a circuit arrangement (61) with a sensor (47) attached in a housing (37) of the rotary encoder (15), which is set up to detect a position of the encoder disc (45), **characterised in that** the housing (37) comprises at least one catch element (65) which engages with the circuit arrangement (61) and accordingly fixes the latter in the housing (37).

2. The rotary encoder (15) according to claim 1, **characterised in that** the housing (23) comprises at least one guide pin (77), which extends along a plug-in direction (75) for the insertion of the circuit arrangement (61) into the housing (37) and projects into a guide hole (79) of the circuit arrangement (61) attached in the housing (37).

3. The rotary encoder (15) according to claim 1 or 2, **characterised in that** the circuit arrangement (61) attached in the housing (37) is held by the catch element (65) in contact with a contact surface (81) of the housing, preferably of a housing base (67).

4. The rotary encoder (15) according to claim 3, **characterised in that** the catch element (65) comprises an insertion incline (71), which is inclined, with reference to an axis (53) parallel to the plug-in direction (75), away from the contact surface (81).

5. The rotary encoder (15) according to claim 3 or 4, **characterised in that** the catch element (65) comprises a holding incline (73), which is inclined, with reference to the axis (53) parallel to the plug-in direction (75), towards the contact surface (81), wherein the holding incline (73) is in contact with the circuit arrangement (61) attached in the housing (37).

6. The rotary encoder (15) according to one of the preceding claims, **characterised in that** the catch element (65) is deformable in an elastic manner in at least one region.

7. The rotary encoder (15) according to one of the preceding claims, **characterised in that** the catch element (65) is moulded into a side wall (69) of the housing (37), wherein the side wall (69) is adjacent to the housing base (67) and is inclined with reference to the latter, preferably at right angles.

8. The rotary encoder (15) according to one of claims 1 to 6, **characterised in that** the catch element (65) is arranged on the housing base (67) and projects from the latter along the plug-in direction (75).

9. The rotary encoder (15) according to one of the preceding claims, **characterised in that** the housing (37), together with the catch element (65) and/or the guide pin (77), is formed as a single component, preferably as an injection-moulded part made from synthetic material.

10. An electric motor (11) with a rotary encoder (15), wherein the rotary encoder (15) comprises an encoder element (43) with an encoder disc (45), which is connected in a rotationally rigid manner to a shaft (17) of the electric motor (11) and arranged concentrically with the shaft (17), and comprises a circuit arrangement (61) with a sensor (47) attached in a housing (37) of the rotary encoder (15), which is set up to detect a position of the encoder disc (45), **characterised in that** the rotary encoder (15) is a rotary encoder (15) according to one of the preceding claims.

11. A method for manufacturing a rotary encoder (15) for an electric motor (11), wherein the rotary encoder (15) comprises an encoder element (43) with an encoder disc (45), which is set up to be connected in a rotationally rigid manner to a shaft (17) of the electric motor (11), and, according to the method, a circuit arrangement (61) with a sensor (47), which is set up to detect a position of the encoder disc (45), is attached in a housing of the rotary encoder (15), **characterised in that** the circuit arrangement (61) is attached in the housing (37) in such a manner that at least one catch element (65) engages with the circuit arrangement (61) and accordingly fixes the latter in the housing (37).

12. The method according to claim 11, **characterised in that** the circuit arrangement (61) is inserted into the housing (37) along a plug-in direction (75) until the catch element (65) engages with the circuit arrangement (61) in order to fix it in the housing (37).

13. The method according to claim 11 or 12, **characterised in that** the circuit arrangement (61) is inserted into the housing (37) until it is in contact with a contact surface (81) of the housing (37), preferably of a housing base (67).

14. The method according to one of claims 11 to 13, **characterised in that** a rotary encoder (15) according to one of claims 1 to 9 is manufactured.

## Revendications

1. Indicateur d'angle de rotation (15) pour un moteur électrique (11), l'indicateur d'angle de rotation (15) présentant un élément d'indicateur (43) avec un disque d'indicateur (45) qui est agencé pour être raccordé de façon solidaire en rotation à un arbre (17) du moteur électrique (11) et qui est disposé de façon concentrique à l'arbre (17), et comprend un dispositif de commande (61), fixé dans un boîtier (37) de l'indicateur d'angle de rotation (15), avec un capteur (47) qui est agencé pour la détection d'une position du disque d'indicateur (45), **caractérisé en ce que** le boîtier (37) présente au moins un élément d'encliquetage (65) qui agit sur le dispositif de commande (61) et fixe celui-ci dans le boîtier (37).

2. Indicateur d'angle de rotation (15) selon la revendication 1, **caractérisé en ce que** le boîtier (23) présente au moins une broche de guidage (77) qui s'étend le long d'une direction d'insertion (75) pour l'insertion du dispositif de commande (61) dans le boîtier (37) et qui dépasse dans un trou de guidage (79) du dispositif de commande (61) fixé dans le boîtier (37).

3. Indicateur d'angle de rotation (15) selon la revendication 1 ou 2, **caractérisé en ce que** le dispositif de commande (61) fixé dans le boîtier (37), retenu par l'élément d'encliquetage (65), est adjacent à une face d'appui (81) du boîtier, de préférence d'un fond de boîtier (67).

4. Indicateur d'angle de rotation (15) selon la revendication 3, caractérisé en ce quel'élément d'encliquetage (65) présente une pente d'entrée (71) qui est inclinée en s'éloignant de la face d'appui (81) par rapport à un axe (53) parallèle à la direction d'insertion (75).

5. Indicateur d'angle de rotation (15) selon la revendication 3 ou 4, caractérisé en ce quel'élément d'encliquetage (65) présente une pente de retenue (73)qui est inclinée vers la face d'appui (81) par rapport à l'axe (53) parallèle à la direction d'insertion (75), la pente de retenue (73) étant adjacente au dispositif de commande (61) fixé dans le boîtier (37).

6. Indicateur d'angle de rotation (15) selon l'une des revendications précédentes, caractérisé en ce quel'élément d'encliquetage (65) est déformable de façon élastique au moins dans une zone.

7. Indicateur d'angle de rotation (15) selon l'une des revendications précédentes, caractérisé en ce quel'élément d'encliquetage (65) est formé dans une paroi latérale (69) du boîtier (37), la paroi latérale (69) étant attenante au fond de boîtier (67) et inclinée par rapport à celui-ci, de préférence à angle droit.

8. Indicateur d'angle de rotation (15) selon l'une des revendications 1 à 6, caractérisé en ce quel'élément d'encliquetage (65) est disposé sur le fond de boîtier (67) et dépasse de celui-ci le long de la direction d'insertion (75).

9. Indicateur d'angle de rotation (15) selon l'une des revendications précédentes, **caractérisé en ce que** le boîtier (37), conjointement avec l'élément d'encliquetage (65) et/ou avec la broche de guidage (77), est formé en tant que composant unique, de préférence en tant que pièce en matière plastique moulée par injection.

10. Moteur électrique (11) avec un indicateur d'angle de rotation (15), l'indicateur d'angle de rotation (15) présentant un élément d'indicateur (43) avec un disque d'indicateur (45) qui est raccordé de façon solidaire en rotation à un arbre (17) du moteur électrique (11) et qui est disposé de façon concentrique à l'arbre (17), et comprend un dispositif de commande (61), fixé dans un boîtier (37) de l'indicateur d'angle de rotation (15), avec un capteur (47) qui est agencé pour la détection d'une position du disque d'indicateur (45), **caractérisé en ce que,** concernant l'indicateur d'angle de rotation (15), il s'agit d'un indicateur d'angle de rotation (15) selon l'une des revendications précédentes.

11. Procédé de fabrication d'un indicateur d'angle de rotation (15) pour un moteur électrique (11), l'indicateur d'angle de rotation (15) présentant un élément d'indicateur (43) avec un disque d'indicateur (45) qui est agencé pour être raccordé de façon solidaire en rotation à un arbre (17) du moteur électrique (11)et, selon le procédé, undispositif de commande (61)étant fixé dans un boîtier (37) de l'indicateur d'angle de rotation (15) avec un capteur (47) qui est agencé pour la détection d'une position du disque d'indicateur (45), **caractérisé en ce que** le dispositif de commande (61) est fixé dans le boîtier (37) de telle sorte qu'au moins un élément d'encliquetage (65) agit sur le dispositif de commande (61) et fixe ainsi celui-ci dans le boîtier (37).

12. Procédé selon la revendication 11, **caractérisé en ce que** le dispositif de commande (61) est inséré dans le boîtier (37)le long d'une direction d'insertion (75) jusqu'à ce que l'élément d'encliquetage (65) agisse sur le dispositif de commande (61) pour le fixer dans le boîtier (37).

13. Procédé selon la revendication 11 ou 12, **caractérisé en ce que** le dispositif de commande (61) est inséré dans le boîtier (37) jusqu'à ce qu'il soit adjacent à une face d'appui (81) du boîtier (37), de préférence d'un fond de boîtier (67).

14. Procédé selon l'une des revendications 11 à 13, **caractérisé en ce qu'**un indicateur d'angle de rotation (15) selon une des revendications 1 à 9 est fabriqué.
